# EUROPEAN PATENT APPLICATION

(11) **EP 4 803 336 A1**
(43) Date of publication of application: **09.09.2026**
(21) Application number: 26163171.7
(22) Date of filing: 09.03.2026
(51) Int. Cl.: B60J 1/20, B60J 7/00

(54) **VEHICLE PANORAMIC ROOF ASSEMBLY**

(30) Priority: 07.03.2025 ES 202530193
(71) Applicant: Seat, S.A., 08760 Martorell - Barcelona (ES); Skoda Auto a.s., 29301 Mladá Boleslav (CZ); Volkswagen AG, 38440 Wolfsburg (DE)
(72) Inventor: Carrascosa Rodríguez, Alberto, Martorell (ES); Enrique Saura, Elena, Martorell (ES)
(74) Representative: Pons IP

(57) **Abstract**

The present invention relates to a vehicle panoramic roof assembly comprising: a transparent element (1) and a roof lining (15) comprising: a hollow space (13) arranged parallel to and facing the transparent element (1) to allow light beams to pass into the vehicle. The roof assembly also comprises a curtain (6) movable between a retracted position in which the curtain (6) allows light beams to pass inwards and an extended position in which the curtain (6) is covering the transparent element (1) from below. Furthermore, the front edge (14) comprises a step (7) facing the front end (5) of the curtain (6), wherein the front edge (14) and the front end (5) of the curtain (6) in an extended position define a stepped enclosed space (8) which hinders the passage of light into the vehicle.

## Description

### OBJECT OF THE INVENTION

The object of the invention is a vehicle panoramic roof assembly which has a transparent element and a sliding curtain in a hollow space of a roof lining. The curtain has a front end parallel to a front edge of the roof lining, so that the curtain moves between an extended position when the front edge and the front end are close together blocking the passage of light into the vehicle, and a retracted position when the front edge and the front end are far apart and light enters into the vehicle through the transparent element and the hollow space. The front edge of the roof lining has a stepped shape that reduces the passage of light between the front edge and the front end of the curtain in the extended position.

### BACKGROUND OF THE INVENTION

Vehicles are known to have a panoramic roof assembly in which a transparent element is provided on the roof of the vehicle and a movable curtain on the inside of the passenger compartment which can be pulled back to allow light to pass through or extended to block the passage of light. In this way, the curtain has a roll at the rear, unrolling the curtain as it moves towards the front, the curtain being attached to a guide shaft that moves along side rails of the reinforcing frame, between the retracted and extended position.

On the other hand, the curtains of panoramic roof assemblies have a complex construction, since in order to prevent or reduce the passage of light through the transparent element from the outside to the inside of the passenger compartment when the curtain is in the extended position, the curtain is usually brought into contact with the roof lining. However, contact between rigid parts such as a front edge of the roof lining and a front end of the curtain where the guide shaft is located generates vibrations and noise during operation of the vehicle, which is annoying and uncomfortable for the occupants.

For this reason, the side rails or the roll-up mechanism of the curtain itself limit the movement of the curtain to prevent contact between the front end and the front edge, forming a longitudinal space between the two. However, this causes the light passing through the transparent element to be reflected on the front edge directly into the passenger compartment. In this way, the occupants can see a line of light despite the extended position of the curtain, but vibrations and noise between rigid elements are avoided as there is no contact.

Known solutions include the incorporation of additional elements on the front edge of the inner roof lining or on the front end of the curtain, such as elastomeric elements that occupy the space between the front end of the curtain and the front edge of the roof lining, preventing the passage of light into the passenger compartment of the vehicle. As it is an elastic material, it does not generate noise due to contact between the parts. However, the addition of these elastic elements entails a more complex structure that attaches the additional elements to either the front edge of the lining or the front end of the curtain, as well as a longer assembly time and greater cost of said additional part.

### DESCRIPTION OF THE INVENTION

The object of the invention is a panoramic roof assembly comprising a transparent element integrated into the structure of the vehicle, e.g., the roof of said vehicle, which allows light to pass from the outside to the inside of the vehicle. Similarly, said transparent element allows an occupant of the vehicle to view from inside the passenger compartment of the vehicle to the outside. Thus, the metal components defining the roof structure of the vehicle comprise a through hole configured to house and support the transparent element.

The panoramic roof assembly additionally comprises a roof lining, which in turn also comprises a hollow space. The roof lining is the component visible from inside the vehicle, the function of which is to give the passenger compartment a good visual finish, for example, by concealing the metal components of the roof structure. This hollow space is arranged facing or below the transparent element in such a way that external light passing directly through the transparent element also passes through the hollow space and illuminates the inside of the passenger compartment of the vehicle.

The roof lining further comprises a front edge, a rear edge opposite the front edge, and side edges. Said edges delimit the perimeter of the hollow space. The front and rear directions are referenced according to the vehicle's direction of travel.

On the other hand, a curtain comprising said roof assembly is movable in the hollow space between a retracted position in which the curtain allows light beams to pass into the passenger compartment of the vehicle, the curtain being, for example, concealed by the roof lining, and an extended position in which the curtain is arranged in the hollow space covering the transparent element from the rear edge to the front edge from below. The curtain may have a mechanical roll-up system or similar at the rear edge which allows the curtain to be stored in a compressed or rolled up manner when in the retracted position and prevents the curtain from folding or creasing.

According to a particular embodiment, the panoramic roof assembly may also comprise side rails arranged in a reinforcing frame. Said side rails delimit the hollow space on its lateral sides and create guide surfaces on which the curtain moves between the retracted position and the extended position. Said reinforcing frame is to be understood as a structural component, arranged between the roof structure of the vehicle and the roof lining, which serves as a support for, for example, said side rails or the roll-up system. The roof lining also allows the reinforcing frame to be at least partially concealed.

In a novel way, the front edge of the roof lining has a section with a geometry in the form of a step, said step facing the front end of the curtain, wherein the front edge of the roof lining and the front end of the curtain in an extended position define a stepped enclosed space which hinders the passage of light into the vehicle.

The stepped geometry of the front edge of the roof lining and the stepped enclosed space defined between the roof lining and the curtain in its extended position make it impossible for an occupant of the vehicle to establish direct visual contact with a surface illuminated by the light beams entering through the transparent element. It should be noted that, despite the curtain being in its extended position, the light beams still pass through the transparent element and can, for example, directly or indirectly strike the front, rear or side edges of the roof lining.

The stepped geometry of the front edge of the roof lining ensures that an occupant inside the passenger compartment of the vehicle does not make direct visual contact with an illuminated surface, despite the curtain being in the extended position.

Likewise, the front edge may consist of a vertical section perpendicular to the transparent element, a horizontal section parallel to the transparent element and below the curtain and at least one step between the vertical section and the horizontal section, which is intended to prevent the passage of light reflected on the vertical section. Therefore, the arrangement of the step reduces the size of the vertical section, and, on the other hand, the step is arranged in the passage of the light reflected by the vertical section into the passenger compartment, the step reflecting said light towards the front end of the curtain or above it, which prevents the light from entering the passenger compartment of the vehicle directly. Whenever the light strikes a surface, part of the light is absorbed and the light is partially reflected in an attenuated form. **In** addition, the arrangement of the step prevents an occupant inside the passenger compartment from having direct visual contact with the vertical section of the front edge.

It should be noted that this vertical section can receive direct or indirect light beams, which pass through the transparent element even when the curtain is an extended position. Consequently, the arrangement of the front edge of the roof lining that incorporates the stepped geometry ensures that said occupant will have direct visual contact with the step itself, and not with the aforementioned vertical section.

Optionally, the step can have a vertical portion parallel to the vertical section and adjacent to the horizontal section, and a horizontal portion parallel to the horizontal section and adjacent to the vertical section. In this way, the light passing through the transparent element is partially projected onto the vertical section and onto the horizontal portion of the step. Given the arrangement of the step, the light striking the vertical section and the horizontal portion is reflected towards the front end of the curtain, towards the transparent element or towards any element above the horizontal portion, so that light cannot be reflected directly into the vehicle. In addition, the arrangement of the step ensures that the occupant inside the passenger compartment has direct visual contact with the vertical portion of the step, and not with the vertical section, for the reasons mentioned above.

Furthermore, the step of the front edge and the front end define a stepped enclosed space intended to prevent contact between the front edge and the front end, in particular by preventing vibration and noise associated with said contact. This enclosed space prevents collisions between said rigid and adjacent surfaces during vehicle operation due to the very vibrations of the vehicle which cause irritating noises.

Optionally, the step may have a chamfer or joint at the corners formed between the vertical and horizontal portions or with the corners formed between said vertical and horizontal portions with the horizontal or vertical sections. These chamfers or joints facilitate both extrusion and moulded manufacturing by preventing retentive areas, in addition to providing a softer aesthetic appearance by avoiding aggressive ridges on the front edge that may be partially visible to occupants.

The light partially reflected on the front end of the curtain is in turn partially reflected towards the step and towards the horizontal section of the front edge. The light partially reflected on the horizontal section is partially reflected back onto the curtain, while the light striking the vertical portion of the step may be partially reflected as part of the light into the vehicle. This light partially reflected by the step is very dim compared to the light reflected by the vertical section and almost negligible, as it has been subject to multiple reflections on different surfaces that partially absorb and attenuate said light. Furthermore, the light from the vertical portion is reflected almost horizontally into the passenger compartment, so that it can hardly be seen by direct visual contact by the occupants of the vehicle.

Optionally, the front edge of the roof lining and/or the front end of the curtain may be subjected to different treatments that reduce the ability to reflect light. In this way, the front edge of the roof lining and/or the front end of the curtain may have a coating of a dark colour, such as black. This increases the absorption of light by said surfaces, limiting or reducing the reflection of light and attenuating said light, which results in the final light reflected into the passenger compartment being dimmer or almost imperceptible.

Optionally, the front edge of the roof lining and/or the front end of the curtain may have a rough finish, which reflects the light diffusely, thus causing a blurring of the light reflection. Diffuse reflection means the reflection of light on a surface in such a way that an incident ray is reflected at many angles, instead of just one angle, as in the case of specular reflection. This means that, with the curtain in an extended position, the light striking the front edge of the roof lining and/or the front end of the curtain is reflected in an attenuated form, so that less light can be reflected into the passenger compartment. Furthermore, the light reflected on the step can also be scattered, so that the light reflected by the step is dimmed or limited.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:
Figure 1 shows an exploded view of a panoramic roof assembly.
Figure 2 shows a sectional view of the panoramic roof assembly where the curtain is in an extended position, according to the present invention.
Figure 3 shows a perspective view from inside the vehicle where the curtain is in an extended position, according to the present invention.

### PREFERRED EMBODIMENT OF THE INVENTION

The following describes a preferred embodiment of a panoramic roof assembly for a vehicle which constitutes the object of this invention.

The vehicle panoramic roof assembly of the preferred embodiment comprises a transparent element (1) intended to be integrated into the structure of the vehicle and configured to allow light beams to pass from the outside into a passenger compartment of the vehicle. Furthermore, a roof lining (15) covers the roof surface facing towards the inside of the passenger compartment. Said roof lining (15) in turn comprises a hollow space (13) arranged parallel to and facing the transparent element (1), a front edge (14), a rear edge (16) opposite the front edge (14) and two side edges (17). Said hollow space (13) is configured to allow light beams to pass into the passenger compartment of the vehicle, wherein the hollow space (13) is bounded by the front edge (14), the rear edge (16) and the side edges (17).

Furthermore, the roof assembly has a curtain (6) which is movable in the hollow space (13) between a retracted position, in which the curtain (6) allows light beams to pass into the passenger compartment of the vehicle, and an extended position, in which the curtain (6) is arranged in the hollow space (13) covering the transparent element (1) from below. The curtain (6) comprises a front end (5) facing parallel to the front edge (14).

In the roof assembly, the front edge (14) comprises a section with a geometry in the form of a step (7), said step (7) facing the front end (5) of the curtain (6), wherein the front edge (14) of the roof lining (15) and the front end (5) of the curtain (6) in an extended position define a stepped enclosed space (8) which hinders the passage of light into the vehicle.

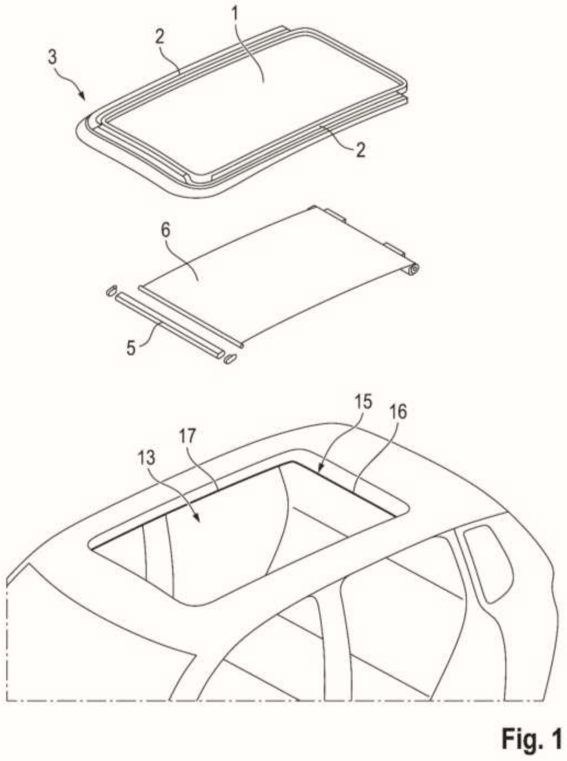

Fig.1 shows an exploded perspective of the panoramic roof assembly with the transparent element (1) integrated into a reinforcing frame (3), which is attached to the structure of the vehicle over the roof lining (15). The structure of the vehicle has an outer roof lining, a front cross member and a rear cross member. **In** this way, the reinforcing frame (3) is integrated into the roof of the vehicle and is concealed from the occupants by the roof lining (15).

The reinforcing frame (3) is located on the roof of the vehicle, between the structure of the vehicle and the roof lining (15), being a structural component that is intended to serve as a support for other elements, such as the curtain (6) itself. For a more aesthetic finish, the reinforcing frame (3) is partially concealed by the roof lining (15).

On the other hand, the curtain (6) is located in the hollow space (13) so that, in a retracted position of said curtain (6), a rear end is rolled up in the rear edge (16) and the front end (5) of the curtain (6) advances from the rear edge (16) towards the front edge (14), when passing from the retracted position of the curtain (6) to the extended position. In this way, the curtain (6) is movable in the hollow space (13).

Side rails (2), which according to the embodiment shown are arranged in the reinforcing frame (3), delimit the hollow space (13) on its lateral sides. The front end (5) of the curtain (6) comprises a guide shaft, said guide shaft being configured to slide along the side rails (2) between the retracted position and the extended position of the curtain (6). The side rails (2) are located in the reinforcing frame (3) and together with the side edges (17) of the roof lining (15) thus delimit the hollow space (13) on its lateral sides.

In this way, the guide shaft moves the curtain (6) as it moves along the side rails (2) between the extended and retracted positions. The movement of the curtain (6) may be manual, by direct action of the user on said guide shaft, or automatic by means of a motor element, controllable by at least one of the occupants of the passenger compartment of the vehicle.

The maximum movement of the guide shaft, i.e., when the curtain (6) is in the extended position, is limited by preventing direct contact between the front edge (14) of the roof lining (15) and the front end (5) of the curtain (6). Thus, the extended position of the curtain (6) is defined by a stop arranged on at least one of the side rails (2) and configured to contact the guide shaft of the curtain (6). This stop prevents contact between the front end (5) and the front edge (14). Alternatively, the maximum length of the curtain (6) is defined by preventing contact between the front end (5) and the front edge (14).

In another alternative embodiment, the maximum number of turns that can be made by the actuator acting on the automatically operated curtain (6) is limited, thus preventing contact between the front end (5) and the front edge (14).

The front end (5) on which the guide shaft is located moves parallel to the front edge (14) from the retracted position of the curtain (6) where the front end (5) is away from the front edge (14) to the extended position of the curtain (6). **In** the retracted position of the curtain (6), the light enters through the transparent element (1) into the vehicle and passing through the hollow space (13) while, in the extended position, the curtain (6) stops the passage of light into the vehicle.

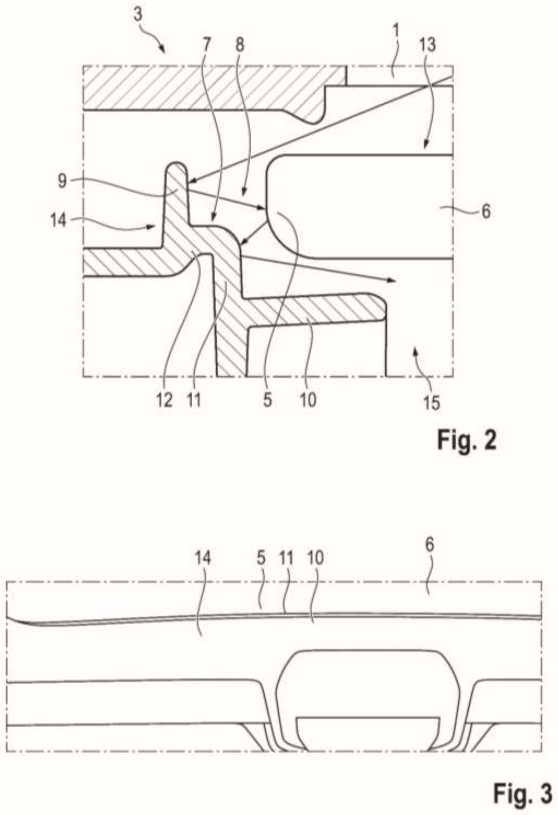

Fig.2 shows a section of the front edge (14) of the roof lining (15) and the front end (5) of the curtain (6), said curtain (6) being in an extended position. In the roof lining (15), the front edge (14) comprises: a vertical section (9) perpendicular to the transparent element (1) and a horizontal section (10) parallel to the transparent element (1) and below the curtain (6) along a vertical direction perpendicular to the transparent element (1), such that the step (7) is arranged between the vertical section (9) and the horizontal section (10) and oriented towards the front end (5) of the curtain (6).

Thus, in the extended position of the curtain (6), the vertical section (9), the step (7), the horizontal section (10), and the front end (5) define a stepped enclosed space (8) which hinders the passage of light from the outside through the transparent element (1) into the vehicle. Furthermore, in the extended position of the curtain (6), the stepped enclosed space (8) between the step (7) and the front end (5) is intended to prevent contact between the front edge (14) and the front end (5).

As mentioned, said front edge (14) comprises the vertical section (9), the horizontal section (10) and the step (7). The step (7) comprises a vertical portion (11) extending at the top from the horizontal section (10) and parallel to the vertical section (9) and a horizontal portion (12) parallel to the horizontal section (10) extending from the vertical portion (11) to the vertical section (9). Furthermore, the horizontal portion (12) is arranged elevated with respect to the lower part of the front end (5) of the curtain (6), along a vertical direction perpendicular to the transparent element (1), such that the vertical section (9) and the horizontal portion (12) are concealed from an observer at any position inside the passenger compartment of the vehicle.

Given this configuration, the light passing through the transparent element (1) is projected onto the vertical section (9) and part of said light can be reflected for the first time on the front end (5), as indicated in Fig.2 with arrows. The light striking the front end (5) may be partially reflected a second time on the step (7), and specifically on the vertical portion (11). A third reflection may take place where the striking light is partially reflected from the step (7) into the vehicle. The path of the light from the outside to the inside of the vehicle causes the light to be attenuated each time it is partially reflected, with little or no light being reflected into the passenger compartment.

In said Fig.2, arrows show the path of the light and the partial reflection produced on the different surfaces in the most direct way from the outside to the inside of the vehicle when the curtain (6) is in an extended position. In this way, the light passes obliquely through the transparent element (1) to the vertical section (9), since the vertical section (9), the step (7) and the horizontal section (10) are covered from the top by a part of the roof of the vehicle. Consequently, the arrangement of the elements makes it impossible for the light beams to directly strike the vertical portion (11) of the step (7) and the horizontal section (10). Likewise, given the arrangement of the elements described above, an observer at any position inside the passenger compartment will never have direct visual contact with the vertical section (9) or the horizontal portion (12) of the step (7). As mentioned above, these two surfaces are the only ones that can be illuminated by light beams directly striking from the outside. On the contrary, the observer will have direct visual contact with the vertical portion (11) of the step (7), which cannot be illuminated by light beams directly striking from the outside. Consequently, the observer is prevented from perceiving an illuminated line or an illuminated surface on the front edge (14) of the roof lining (15).

Fig.3 shows the view of the occupants from inside the passenger compartment when the curtain (6) is in an extended position, where only a small part of the step (7) is visible, namely a part of the vertical portion (11). Given the multiple reflections of light in the stepped enclosed space (8), the vertical portion (11) is virtually unlit, so that the interior of the passenger compartment is unlit.

The end of the side rail (2) places the front end (5) close to the front edge (14) preventing direct contact between the front edge (14) and the curtain (6), forming the enclosed space (8) between the step (7) and the front end (5) through which the light passes indirectly by reflecting and attenuating. The separation distance between the vertical portion (11) and the front end (5) of the curtain (6) is less than the separation distance between the vertical section (9) and said front end (5) of the curtain (6) along a horizontal direction parallel to the transparent element (1), the curtain (6) being in any position.

Additionally, the front edge (14) of the roof lining (15) and/or the front end (5) of the curtain (6) comprise a coating of dark material. For example, the coating of dark material is black, so that it is intended to partially or almost fully absorb projected or reflected light, minimising the internal reflection of the light beams. Said coating is optionally a paint or similar that covers the parts visible from inside the passenger compartment.

Alternatively or additionally, the front edge (14) of the roof lining (15) and/or the front end (5) of the curtain (6) comprise a rough surface finish. This rough surface finish has, for example, reliefs intended to reflect light non-uniformly at different angles, so that light is reflected more in the enclosed space (8). Said rough parts are round or triangular, causing the light projected from the outside to strike multiple surfaces at different angles.

## Claims

1. A vehicle panoramic roof assembly, comprising:
a transparent element (1) intended to be integrated into the structure of the vehicle and configured to allow light beams to pass from the outside into a passenger compartment of the vehicle,
a roof lining (15) covering the roof surface facing towards the inside of the passenger compartment, in turn comprising:
• a hollow space (13) arranged parallel to and facing the transparent element (1), said hollow space (13) being configured to allow light beams to pass into the passenger compartment of the vehicle,
• a front edge (14), a rear edge (16) opposite the front edge (14) and two side edges (17), wherein the hollow space (13) is bounded by the front edge (14), the rear edge (16) and the side edges (17),
a curtain (6) which is movable in the hollow space (13) between a retracted position, in which the curtain (6) allows light beams to pass into the passenger compartment of the vehicle, and an extended position, in which the curtain (6) is arranged in the hollow space (13) covering the transparent element (1) from below, and in which the curtain (6) comprises a front end (5) facing parallel to the front edge (14),
**characterised in that** the front edge (14) comprises a section with a geometry in the form of a step (7), said step (7) facing the front end (5) of the curtain (6), wherein the front edge (14) of the roof lining (15) and the front end (5) of the curtain (6) in an extended position define a stepped enclosed space (8) which hinders the passage of light into the vehicle.

2. The roof assembly according to claim 1, wherein the front edge (14) of the roof lining (15) additionally comprises:
a vertical section (9) arranged perpendicular to the transparent element (1),
a horizontal section (10) arranged parallel to the transparent element (1) and below the curtain (6) along a vertical direction perpendicular to the transparent element (1), such that the step (7) is arranged between the vertical section (9) and the horizontal section (10) and oriented towards the front end (5) of the curtain (6).

3. The roof assembly of claim 2, wherein the step (7) comprises a vertical portion (11) extending at the top from the horizontal section (10) and parallel to the vertical section (9) and a horizontal portion (12) parallel to the horizontal section (10) extending from the vertical portion (11) to the vertical section (9).

4. The roof assembly of claim 3, wherein, with the curtain (6) in the extended position, the horizontal portion (12) is arranged elevated with respect to the lower part of the front end (5) of the curtain (6), along a vertical direction perpendicular to the transparent element (1), such that the vertical section (9) and the horizontal portion (12) are concealed from an observer at any position inside the passenger compartment of the vehicle.

5. The roof assembly according to any of claims 2 to 4, wherein the separation distance between the vertical portion (11) and the front end (5) of the curtain (6) is less than the separation distance between the vertical section (9) and said front end (5) of the curtain (6) along a horizontal direction parallel to the transparent element (1), the curtain (6) being in any position.

6. The roof assembly according to any of the preceding claims, wherein the front edge (14) of the roof lining (15) and/or the front end (5) of the curtain (6) comprise a coating of dark material.

7. The roof assembly according to any of the preceding claims, wherein the front edge (14) of the roof lining (15) and/or the front end (5) of the curtain (6) comprise a rough surface finish.

8. The roof assembly according to any of the preceding claims, comprising side rails (2) which delimit the hollow space (13) on its lateral sides, and wherein the front end (5) of the curtain (6) comprises a guide shaft, said guide shaft being configured to slide along the side rails (2) between the retracted position and the extended position of the curtain (6).

9. The roof assembly according to any of claims 1 to 8, wherein the extended position of the curtain (6) is defined by a stop arranged on at least one of the side rails (2) and configured to contact the guide shaft of the curtain (6), preventing contact between the front end (5) and the front edge (14).

10. The roof assembly according to any of claims 1 to 8, wherein the extended position of the curtain (6) is defined by the maximum length of the curtain (6), preventing contact between the front end (5) and the front edge (14).
